# EUROPÄISCHE PATENTANMELDUNG

(11) **EP 0 841 523 A2**
(43) Veröffentlichungstag der Anmeldung: **13.05.1998**
(21) Anmeldenummer: 97119557.3
(22) Anmeldetag: 07.11.1997
(51) Int. Cl.: F24J 2/46

(54) **Solarabsorber mit Wellrohrabschnitten**

(30) Priorität: 07.11.1996 DE 19646001
(71) Anmelder: Müller, Friedrich Udo, 74589 Satteldorf (DE)
(72) Erfinder: Müller, Friedrich Udo, 74589 Satteldorf (DE)
(74) Vertreter: Beyer, Andreas, Dr.

(57) **Zusammenfassung**

Ein Solarabsorber (10, 10a) weist ein Gehäuse (18), eine Absorberplatte (12), mit der Absorberplatte (12) wärmeleitend verbundene Absorberrohre (14) und seitlich aus dem Gehäuse (18) herausragende Sammelrohre (16, 16') auf, um eine Wärmeträgerflüssigkeit durch den Solarabsorber zirkulieren zu lassen. Zumindest entweder alle auf einer Seite mit ihren Enden aus dem Gehäuse (18) herausragenden Sammelrohre (16, 16') oder zwei auf verschiedenen Seiten mit ihren sich diagonal gegenüberliegenden Enden aus dem Gehäuse (18) herausragende Sammelrohre (16, 16') weisen einen als flexibles Wellrohr (20, 20', 24, 24') ausgebildeten Abschnitt auf, der fest mit dem zugehörigen Sammelrohr (16, 16') verbunden ist. Auf diese Weise läßt sich ein einzelner Solarabsorber eines Kollektorfeldes ohne weiteres trotz unveränderter Position der angrenzenden Solarabsorber aus dem Kollektorfeld herausnehmen und der Ein- bzw. Ausbau einer vormontierten Absorberplatte (12) in das bzw. aus dem Solarabsorbergehäuse (18) ist erheblich vereinfacht.

## Beschreibung

Die Erfindung betrifft einen Solarabsorber mit einem Gehäuse, einer darin angeordneten Absorberplatte, sowie mit der Absorberplatte wärmeleitend verbundenen Absorberrohren, die zu aus dem Gehäuse seitlich herausragenden Sammelrohren führen, um eine Flüssigkeit durch den Solarabsorber zu zirkulieren.

Sonnenkollektoranlagen dienen insbesondere der Aufheizung von Nutz- und Brauchwasser. Sie werden in der Regel auf einem Dach oder einer anderen der Sonneneinstrahlung ausgesetzten Stelle positioniert, und eine sogenannte Wärmeträgerflüssigkeit transportiert die durch Absorption gewonnene Wärme von der Sonnenkollektoranlage üblicherweise zu einem Wärmetauscher, der das Brauch- oder Nutzwasser erwärmt.

Eine Sonnenkollektoranlage besteht meistens aus mehreren Solarabsorbern. Handelt es sich dabei um Solarabsorber der eingangs genannten Art, dann ist jeder Solarabsorber durch ein Gehäuse begrenzt, in dem die Absorberplatte, die Absorberrohre und üblicherweise zwei Sammelrohre angeordnet sind. Das eine Sammelrohr dient dabei der Zufuhr von aufzuheizender Wärmeträgerflüssigkeit zu dem oder den Absorberrohren, während das andere Sammelrohr die erwärmte Wärmeträgerflüssigkeit aus den Absorberrohren aufnimmt und abführt. Häufig müssen mehrere Solarabsorber nebeneinander angeordnet werden, und die Wärmeträgerflüssigkeit strömt parallel durch die Absorberrohre aller Solarabsorber, die parallel geschaltet sind. Sind die Solarabsorber nebeneinander auf zum Beispiel einem Schrägdach angeordnet, so verläuft durch die oberen Abschnitte der Gehäuse eine gemeinsame Sammelleitung für die erwärmte Wärmeträgerflüssigkeit, die durch Verbindung der oberen Sammelrohre der einzelnen Solarabsorber entsteht, und durch die unteren Abschnitte der Gehäuse verläuft entsprechend eine weitere Sammelleitung für die aufzuheizende Wärmeträgerflüssigkeit, auch Zuführ- oder Verteilerleitung genannt, die durch Verbindung der unteren Sammelrohre der einzelnen Solarabsorber entsteht. Jede Sammelleitung stellt also die Gesamtheit der entsprechenden Sammelrohre dar.

Grundsätzlich ist jedoch zwischen zwei verschiedenen Solarabsorberbauarten zu unterscheiden: Bei der einen Solarabsorberbauart verlaufen die Verteiler- und Sammelleitungen, die im Rahmen der vorliegenden Erfindung der Einfachheit halber nur als Sammelleitungen bezeichnet werden, vollständig außerhalb des Solarabsorbergehäuses. Wärmedehnungsprobleme hinsichtlich der Sammelleitungen treten bei dieser Bauart nicht auf, jedoch müssen die außenliegenden Sammelleitungen separat und damit relativ aufwendig wärmegedämmt werden. Zudem beansprucht diese Bauart viel Bauraum. Bei der anderen, im vorhergehenden Absatz schon näher erläuterten und im Rahmen der vorliegenden Erfindung einzig interessierenden Solarabsorberbauart verlaufen Abschnitte der Sammelleitungen, die zuvor bereits erwähnten Sammelrohre, im und durch das Solarabsorbergehäuse. Die Sammelrohre ragen dabei aus dem Gehäuse des zugehörigen Solarabsorbers heraus, um eine einfache Verbindung je zweier aneinanderstoßender Sammelrohre benachbarter Solarabsorber zu ermöglichen. Üblicherweise bestehen die genannten Sammelrohre, die im Gehäuse des Absorbers unten bzw. oben verlaufen, aus einem durchgehenden Metallrohr, das mit beiden Enden aus dem Gehäuse des Solarabsorbers herausgeführt ist.

Die Verbindung der Sammelrohre nebeneinander angeordneter Solarabsorber birgt jedoch Probleme, denn jede dieser Verbindungen muß dem Umstand Rechnung tragen, daß es je nach der Sonneneinstrahlung zu unterschiedlichen Wärmedehnungen kommen kann. Auch können Unebenheiten am Dach zu technischen Problemen bei der Montage mehrerer nebeneinander anzuordnender Solarabsorber und der Verbindung ihrer Sammelrohre sowie beim Anschluß der Sammelrohre von End-Absorbern zum Wärmetauscher führen.

Der Stand der Technik kennt unterschiedliche Möglichkeiten, ein aus dem Gehäuse herausgeführtes Sammelrohr mit dem Sammelrohr eines benachbarten Solarabsorbers zu verbinden. So gibt es zum Beispiel auf das Rohr aufgelötete Verschraubungsanschlüsse. Auch kennt der Stand der Technik glatte Rohrenden zum Aufschieben einer Klemmringverschraubung. Eine weitere Lösung dieses Problems gemäß dem Stand der Technik sieht vor, daß das Rohrende mit einer Schlauchtülle versehen ist, um einen Schlauch anschließen zu können. Eine weitere Lösung dieses Problems gemäß dem Stand der Technik sieht vor, daß das Rohrende (eines aus dem Gehäuse herausgeführten Sammelrohres) umgebördelt ist, wobei eine Verschraubung und Dichtmittel die Verbindung zu einem benachbarten Sammelrohr bzw. den Anschluß an eine Zu- bzw. Ableitung herstellen. Weiterhin kennt der Stand der Technik sogenannte Dehnungskompensatoren in der Verbindung zwischen zwei benachbarten Solarabsorbern, die direkt an die sich gegenüberliegenden Sammelrohrenden angelötet oder auf sie aufgeschraubt sind.

Der Stand der Technik ist verbesserungswürdig, da er noch mit technischen Problemen behaftet ist. Werden nämlich beim Stand der Technik die Kollektoren untereinander mit einem Schlauch, einer Klemmringverschraubung oder auch mit einem Dehnungskompensator verbunden, so muß bei der Demontage auch nur eines Solarabsorbers (Kollektors) aus der Mitte eines Absorberfeldes das gesamte Absorberfeld so weit auseinandergerückt werden, daß die Verbindungsteile (Schlauchanschluß, Dehnungskompensator-Anschluß etc.) vom Sammelrohrende abgezogen werden können, wofür ein gewisses Spiel erforderlich ist. Eine andere Möglichkeit besteht darin, die einzelnen Kollektoren so weit auseinander zu montieren, daß das Entfernen eines einzelnen Kollektors ohne Verschieben der übrigen Kollektoren möglich wird. Jedoch beansprucht diese Alternative viel Platz und ist überdies aufgrund der großen Zwischenräume optisch unbefriedigend.

Bei den genannten Klemmringverschraubungen und der Verschraubung mit umgebördelten Rohrenden besteht weiterhin das Problem der mangelnden Längenkompensation bei Wärmedehnung, wodurch Dichtigkeitsprobleme entstehen können. Auch ist die Montage schwierig und somit aufwendig, wenn am Dach Unebenheiten vorhanden sind und die Sammelrohranschlüsse nicht exakt miteinander fluchten.

Bei Anschlüssen gemäß dem Stand der Technik mit einer Verschraubung besteht weiterhin das Problem, daß die Verschraubung wesentlich dicker ist als das Rohr selbst und deshalb nur sehr schwierig durch die Dichtungsmanschette geschoben werden kann, die die Abdichtung des Kollektorgehäuses gegenüber der Sammelrohrdurchführung gewährleisten soll.

Der Erfindung liegt die Aufgabe zugrunde, einen Solarabsorber so auszubilden, daß eine einfache Montage eines Absorberfeldes und insbesondere die einfache Montage und Demontage eines einzigen Absorbers in ein bzw. aus einem Absorberfeld ermöglicht ist, wobei mit geringem Herstellungs- und Montageaufwand eine sichere Abdichtung der Flüssigkeitsströmung und auch der Kollektorgehäuse gewährleistet sein soll. Des weiteren soll die Montage der Absorberplatte mit den darauf befindlichen Absorberrohren in das und aus dem Solarabsorbergehäuse vereinfacht sein.

Ausgehend von einem gattungsgemäßen Solarabsorber ist diese Aufgabe durch einen Solarabsorber gelöst, der die im Anspruch 1 angebenen Merkmale aufweist. Bei der erfindungsgemäßen Ausgestaltung sind zumindest entweder alle auf einer Seite mit ihren Enden aus dem Solarabsorbergehäuse herausragenden Sammelrohre oder zwei auf verschiedenen Seiten mit ihren sich diagonal gegenüberliegenden Enden aus dem Solarabsorbergehäuse herausragende Sammelrohre mit einem als flexibles Wellrohr ausgebildeten Abschnitt versehen, der fest mit dem zugehörigen Sammelrohr verbunden ist.

Der Erfindung liegt die Erkenntnis zugrunde, daß es zur Erzielung der gewünschten Vorteile ausreicht, entweder alle diejenigen Sammelrohre, die auf ein und derselben Seite aus dem Solarabsorbergehäuse herausragen, oder solche zwei Sammelrohre mit einem flexiblen, längenelastischen Abschnitt zu versehen, deren sich diagonal gegenüberliegende Enden auf unterschiedlichen Seiten aus dem Solarabsorbergehäuse herausgeführt sind. Damit haben diese Sammelrohre einen Bereich, dessen Längserstreckung veränderbar und insbesondere zusammendrückbar ist, so daß - nach dem Lösen der Verbindung zwischen benachbarten Solarabsorbern - ein einzelner Solarabsorber eines Kollektorfeldes ohne weiteres trotz unveränderter Position der angrenzenden Solarabsorber herausgenommen werden kann, indem die Sammelrohre des herauszunehmenden Solarabsorbers entweder auf einer Seite oder an zwei sich diagonal gegenüberliegenden Stellen lediglich in ihrer Länge durch Zusammendrücken verkürzt werden und so den zum Abnehmen der Verbindung und Herausnehmen des Solarabsorbers erforderlichen Platz schaffen. Die erfindungsgemäße Ausgestaltung gleicht darüber hinaus nicht genau fluchtende Sammelrohrenden problemlos aus. Gegebenenfalls vorhandene, weitere Sammelrohre, die nicht aus dem Solarabsorbergehäuse herausragen, brauchen keinen flexiblen Wellrohrabschnitt aufzuweisen.

Die erfindungsgemäße Ausgestaltung vereinfacht auch die Montage der Absorberplatte und der damit wärmeleitend verbundenen Absorberrohre in das Gehäuse des Solarabsorbers erheblich, da die Gesamtabmessung der Absorberplatte mit den darauf befindlichen Absorberrohren durch Komprimieren und ggfs. Biegen der wellrohrförmig ausgestalteten Abschnitte der Sammelrohre soweit verkleinert werden kann, daß sich die vormontierte Absorberplatte leicht in das Solarabsorbergehäuse einfügen läßt. Nach dem Einfügen der Absorberplatte in das Gehäuse und dem anschließenden Durchführen der Sammelrohrenden durch die entsprechenden Gehäuseaussparungen läßt man die wellrohrförmig ausgebildeten Abschnitte einfach wieder expandieren. Es ist nicht mehr notwendig, eine Seitenwand des Gehäuses zunächst wegzulassen und erst nach dem Einbringen der Absorberplatte hinzuzufügen, wie dies bisher der Fall war. Weiterhin kann aufgrund der erfindungsgemäßen Ausgestaltung eine defekte Absorberplatte ausgetauscht werden, ohne daß - wie bisher üblich - der gesamte Solarabsorber ausgebaut und ausgetauscht werden muß.

Erfindungsgemäß kann der flexible, längenelastische Wellrohrabschnitt beispielsweise vollständig innerhalb des Solarabsorbergehäuses angeordnet sein. Eine solche Ausführungsform bietet sich insbesondere dann an, wenn das Absorberrohr eine mäanderförmige Gestalt hat und im Solarabsorbergehäuse nur an jeweils einer Stelle mit den beiden Sammelrohren verbunden ist.

Der flexible, längenelastische Wellrohrabschnitt kann aber auch innerhalb des Solarabsorbergehäuses beginnen und außerhalb des Solarabsorbergehäuses enden. Dabei kann der flexible Wellrohrabschnitt bis zum äußeren Ende des zugehörigen Sammelrohres reichen.

Alle bisher genannten Ausführungsformen haben den Vorteil, daß der aus dem Gehäuse herausragende Teil des Sammelrohres im Sinne kompakter Außenabmessungen des Solarabsorbers sehr kurz gehalten werden kann und dennoch eine ausreichend große, längenelastische und auch flexible Wellrohrstrecke bereitgestellt wird.

Schließlich kann der flexible Wellrohrabschnitt auch erst außerhalb des Solarabsorbergehäuses beginnen und sich entweder bis zum freien Ende des jeweiligen Sammelrohres erstrecken oder vorher enden.

Die flexiblen Wellrohrabschnitte können einstückig mit dem zugehörigen Sammelrohr hergestellt sein. Besonders bevorzugt sind die flexiblen Wellrohrabschnitte der Sammelrohre jedoch quasi-einstückig mit dem zugehörigen Sammelrohr verbunden. Quasi-einstückig soll hier bedeuten, daß das Sammelrohr mit dem Wellrohr zwar nicht einstückig hergestellt ist, daß aber durch die Art der gewählten Verbindung nach dem Verbinden ein Teil erhalten wird, das sich im wesentlichen wie ein einstückig produziertes Teil verhält. Eine solche Verbindung wird vorteilhaft durch Verlöten, Verschweißen oder auch durch Verkleben erzielt. Die Quasi-Einstückigkeit hat mehrere Vorteile: Zum einen wird eine hervorragende Dichtigkeit erzielt, zum anderen wird der freie Rohrquerschnitt nicht oder wenigstens nicht störend reduziert. Aufgrund eines somit nahezu gleichbleibenden Innendurchmesser erfolgt die Strömung innerhalb des Sammelrohres und des damit verbundenen Wellrohrabschnittes praktisch störungsfrei und damit verlustarm.

Vorteilhaft ist jedes Wellrohr aus Metall hergestellt, es kann jedoch auch aus einem insbesondere UV-resistenten und ausreichend flexiblen Kunststoff oder aus einem geeigneten Gummi bestehen.

Wenn der flexible Wellrohrabschnitt bis zum äußeren, freien Ende des zugehörigen Sammelrohres reicht, also dessen außerhalb des Gehäuses gelegenes Ende bildet, dann ist bevorzugt am freien Ende jeweils eine Verschraubung und Dichtmittel vorhanden. Die Verschraubung ist vorteilhaft unverlierbar am Ende des Wellrohrabschnitts gehalten, beispielsweise durch Umbördeln des Wellrohrendes, und die gegenüberliegenden Enden zweier zu verbindender Sammelrohre können auf diese Weise einfach und dicht miteinander verbunden werden.

Nachfolgend wird ein Ausführungsbeispiel der Erfindung anhand der Zeichnung näher erläutert. Es zeigt:
- Fig. 1: ein aus zwei Solarabsorbern bestehendes Absorberfeld,
- Fig. 2: eine Stirnansicht eines Solarabsorbers,
- Fig. 3: das Ende eines Wellrohres, das mit einem Sammelrohr des Solarabsorbers verbunden ist,
- Fig. 4: einen Schnitt durch das Ende eines Wellrohres, und
- Fig. 5: ein abgewandeltes Ende eines Wellrohres.

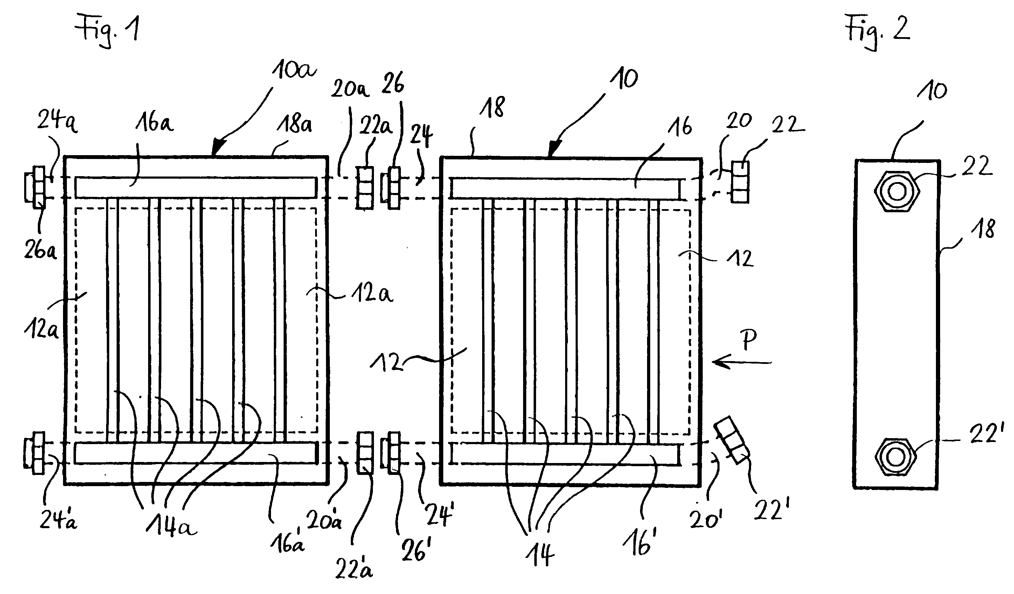

Gemäß Fig. 1 sind zwei Solarabsorber 10, 10a nebeneinander schematisch dargestellt. Die Solarabsorber 10, 10a sind noch nicht fest miteinander zur Erzeugung eines Kreislaufes der Wärmeträgerflüssigkeit verbunden.

Jeder Absorber weist eine sogenannte Absorberplatte 12, 12a auf, die dazu dient, eingestrahlte Sonnenenergie zu absorbieren. Mit den Absorberplatten 12, 12a gut wärmeleitend verbunden sind sogenannte Absorberrohre 14, 14a, durch die die Wärmeträgerflüssigkeit von einem unteren Sammelrohr 16' bzw. 16a' zu einem oberen Sammelrohr 16 bzw. 16a strömt. Die Sammelrohre 16, 16', 16a, 16a' sind üblicherweise aus Metall, können aber auch aus Kunststoff bestehen. Die Erfindung betrifft die spezielle Ausgestaltung dieser Sammelrohre sowie die Führung der Wärmeträgerflüssigkeit von den Sammelrohren aus dem Gehäuse 18 des Solarabsorbers heraus und insbesondere die Verbindung zweier Sammelrohrenden.

Die Sammelrohre 16, 16', 16a, 16a' jedes Solarabsorber 10, 10a sind mit Wellrohrabschnitten (Federbälge) 20, 20', 24, 24', 20a, 20a', 24a, 24a' versehen. Die Wellrohrabschnitte sind flexibel und längenelastisch und können somit nicht nur Wärmedehnungen und -kontraktionen aufnehmen, sondern auch Unebenheiten am Dach bei der Montage ausgleichen und ermöglichen auch ein einfaches Demontieren eines einzelnen Solarabsorbers aus einem größeren Absorberfeld, ohne daß die anderen Solarabsorber verschoben werden müssen.

Die flexiblen Metall-Wellrohrabschnitte 20, 20' etc. führen aus dem Inneren des Solarabsorbergehäuses 18 heraus, d.h. sie reichen von außen durch die Gehäusewandung hindurch bis zum hier ebenfalls metallischen Sammelrohr 16, 16'.

Fig. 2 zeigt eine Stirnansicht des Solarabsorbers 10 in Richtung des Pfeiles P in Fig. 1.

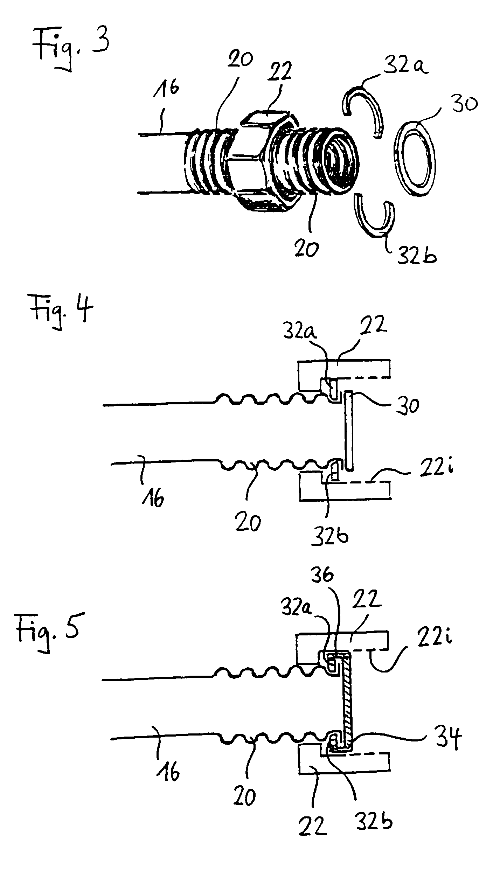

Fig. 3 zeigt Einzelheiten des beispielhaft dargestellten Wellrohrabschnittes 20, der mit dem Sammelrohr 16 im Absorber 10 derart verbunden ist, daß der Wellrohrabschnitt 20 beidseits der Wandung des Gehäuses 18 verläuft (sh. Fig. 1). Im Gehäuseinneren ist der Wellrohrabschnitt 20 zum Beispiel auf das metallische Sammelrohr 16 aufgelötet, aufgeschweißt oder aufgeklebt. Außenseitig des Gehäuses 18 ist auf dem Wellrohrabschnitt 20 eine Überwurfmutter 22 angeordnet. Die Fig. 1 zeigt weitere Überwurfmuttern dieser Art mit den Bezugszeichen 22', 22a, 22a'. Fig. 1 zeigt auch die Verschraubungs-Gegenstücke zu den Überwurfmuttern, also mit Außengewinde versehene Schraubteile 26, 26', 24a, 24a', die mit den Überwurfmuttern verschraubt werden.

Fig. 4 zeigt einen Schnitt durch das Wellrohrende entsprechend Fig. 3. Ein Dichtungsring 30 liegt stirnseitig am aufgebördelten Ende des Wellrohres 20 an und ein Sprengring aus zwei Sprengringhälften 32a, 32b hält die Überwurfmutter 22 auf dem Wellrohr 20, damit das Innengewinde 22i der Überwurfmutter 22 auf ein entsprechendes Außengewinde (nicht gezeigt) des Verschraubungs-Gegenstückes (entsprechend Bezugszeichen 26, 26', 24a, 24a') aufgeschraubt werden kann.

Fig. 5 zeigt eine Abwandlung des vorstehend beschriebenen Ausführungsbeispieles mit einer besonderen Dichtung 34, die einen sich axial erstreckenden Ring 36 aufweist, der über die beiden Sprengringhälften 32a, 32b greift, um diese im Zusammenwirken mit der übergreifenden Überwurfmutter 22 in einem Wellental des Wellrohres 20 zu sichern. Die Dichtung 34 ist zentrisch offen, wie sich versteht.

In Abwandlung des vorstehend beschriebenen bevorzugten Ausführungsbeispieles kann der Wellrohrabschnitt 20 auch außerhalb des Absorbergehäuses 18 am Sammelrohr 16 ansetzen, jedoch ist der beschriebene Übergang im Inneren des Gehäuses vorzuziehen, damit das aus dem Gehäuse herausstehende Sammelrohrende möglichst kurz gehalten werden kann und dennoch eine möglichst große Wellrohrlänge zur Verfügung steht, um die Flexibilität zu erhöhen und um den Absorber durch Stauchen und/oder Verbiegen und anschließendes Strecken des bzw. der Wellrohrabschnitte in das Solarabsorbergehäuse 18 ein- bzw. auszubauen zu können.

In Abwandlung des vorstehend beschriebenen Ausführungsbeispieles kann das Wellrohrende auch mit einer aufgelöteten, aufgeschweißten oder aufgeklebten Verschraubung versehen sein, jedoch bedingt eine solche Lösung eine relativ große Dichtungsmanschette (Durchführung) im Absorbergehäuse.

In weiterer Abwandlung des oben beschriebenen Ausführungsbeispieles müssen auch nicht alle Zu- bzw. Ableitungen des Solarabsorbers mit einem flexiblen Wellrohrabschnitt ausgerüstet sein. Um die genannten Ziele weitgehend zu erreichen, genügen auch schon zwei Wellrohrabschnitte auf einer Seite des Solarabsorbers (z.B. die Wellrohrabschnitte 20, 20').

Auch ist es möglich, die Wellrohrabschnitte nur an zwei diagonal gegenüberliegenden Stellen des Solarabsorbers anzuordnen (also zum Beispiel die Wellrohrabschnitte 20 und 24'), während die übrigen Verbindungen zu den Sammelrohren 16, 16' etc. in herkömmlicher Weise gestaltet sein können. Weiter besteht die Möglichkeit, daß bei einem Sammelrohr beide Enden mit flexiblen Wellrohrabschnitten versehen sind, während beim anderen Sammelrohr beide Enden herkömmlich ausgeführt sind.

In Abwandlung des vorstehend beschriebenen Ausführungsbeispieles können die Sammelrohre 16, 16' oder auch die flexiblen Wellrohrabschnitte aus Kunststoff oder Gummi bestehen.

Die flexiblen Wellrohrabschnitte befinden sich in den Ausführungsbeispielen immer am Ende der Sammelrohre, sie können jedoch ohne weiteres an einer anderen Stelle des Sammelrohres angeordnet sein, auch vollständig im Inneren des Solarabsorbergehäuses.

## Patentansprüche

1. Solarabsorber (10) mit einem Gehäuse (18), einer darin angeordneten Absorberplatte (12), sowie mit der Absorberplatte (12) wärmeleitend verbundenen Absorberrohren (14), die zu aus dem Gehäuse (18) seitlich herausragenden Sammelrohren (16, 16') führen, um eine Flüssigkeit durch den Solarabsorber (10) zu zirkulieren,
dadurch gekennzeichnet, daß
zumindest entweder alle auf einer Seite mit ihren Enden aus dem Gehäuse (18) herausragenden Sammelrohre (16, 16') oder zwei auf verschiedenen Seiten mit ihren sich diagonal gegenüberliegenden Enden aus dem Gehäuse (18) herausragende Sammelrohre (16, 16') einen als flexibles Wellrohr (20, 20', 24, 24') ausgebildeten Abschnitt aufweisen, der fest mit dem zugehörigen Sammelrohr (16, 16') verbunden ist.

2. Solarabsorber nach Anspruch 1,
dadurch gekennzeichnet, daß der flexible Wellrohrabschnitt (20, 20', 24, 24') innerhalb des Solarabsorbergehäuses (18) beginnt und außerhalb des Solarabsorbergehäuses (18) endet.

3. Solarabsorber nach Anspruch 1 oder 2,
dadurch gekennzeichnet, daß der flexible Wellrohrabschnitt (20, 20', 24, 24') bis zum äußeren Ende des zugehörigen Sammelrohres (16, 16') reicht.

4. Solarabsorber nach Anspruch 3,
dadurch gekennzeichnet, daß das freie Ende jedes Wellrohrabschnitts (20, 20', 24, 24') mit einer Verschraubung (22, 26, 22', 26') und Dichtmitteln (30; 34) versehen ist.

5. Solarabsorber nach einem der Ansprüche 1 bis 4,
dadurch gekennzeichnet, daß jeder flexible Wellrohrabschnitt (20, 20', 24, 24') quasi-einstückig mit dem zugehörigen Sammelrohr (16, 16') verbunden ist, insbesondere durch Verlöten, Verschweißen oder Verkleben.

6. Solarabsorber nach einem der vorhergehenden Ansprüche,
dadurch gekennzeichnet, daß der flexible Wellrohrabschnitt (20, 20', 24, 24') aus Metall besteht.
